# EUROPÄISCHE PATENTSCHRIFT

(11) **EP 2 271 522 B1**
(45) Veröffentlichungstag und Bekanntmachung des Hinweises auf die Patenterteilung: **07.11.2018**
(21) Anmeldenummer: 09731699.6
(22) Anmeldetag: 02.04.2009
(51) Int. Cl.: B60R 25/10, B60R 25/102, B60R 25/33, G08B 25/01, G08G 1/00

(54) **ORTUNGSSIGNAL FÜR EINSATZKRÄFTE**
POSITIONING SIGNAL FOR RESCUE FORCES
SIGNAL DE REPÉRAGE POUR FORCES D'INTERVENTION

(30) Priorität: 14.04.2008 DE 102008018751; 21.10.2008 DE 102008043001; 22.10.2008 DE 102008043083; 22.10.2008 DE 102008043050
(43) Veröffentlichungstag der Anmeldung: 12.01.2011
(73) Patentinhaber: Continental Teves AG & Co. OHG, 60488 Frankfurt am Main (DE)
(72) Erfinder: STÄHLIN, Ulrich, 65670 Eschborn (DE); MERZBACHER, Ralf, 65719 Hofheim (DE); MÖLLER, Ulrich, 83607 Holzkirchen (DE); SCHÄFER, Maik, 88048 Friedrichshafen-Kluftern (DE); BIRKE, Carsten, 60433 Frankfurt am Main (DE); MENZEL, Marc, 35043 Marburg (DE)
(86) Internationale Anmeldenummer: PCT/EP2009/053926
(87) Internationale Veröffentlichungsnummer: WO 2009/127524

(56) Entgegenhaltungen:
- EP-A1- 1 054 371
- WO-A-98/59256
- GB-A- 2 397 930
- US-A- 5 081 667

## Beschreibung

### Gebiet der Erfindung

Die Erfindung betrifft die Koordination von Rettungseinsätzen. Insbesondere betrifft die Erfindung eine Notrufeinheit für ein Fahrzeug, ein Fahrzeug mit einer Notrufeinheit, ein Verfahren zum mehrmaligen Übermitteln eines Ortungssignals an einen Empfänger einer Einsatzkraft, ein Programmelement und ein computerlesbares Medium.

### Technologischer Hintergrund

Ein automatisierter Notruf (eCall) kann zur Alarmierung von Rettungskräften, die den Insassen eines verunfallten Fahrzeugs zu Hilfe kommen sollen, verwendet werden. Zusammen mit dem eCall können weitere Informationen über den Unfall bzw. das Fahrzeug übermittelt werden.

Sind diese Informationen allerdings unzureichend, beispielsweise weil die Positionsinformation zu ungenau ist (der 112-eCall der EU schreibt eine Genauigkeit von ±150m in 95% der Fälle vor), oder weil die Einsatzkräfte noch weitere Informationen benötigen, kann sich der Rettungseinsatz verzögern oder gar unmöglich werden.

Die WO 9859256 offenbart ein System, welches ein Verfolgen und ein Überwachen eines Fahrzeuges durch ein komponentenweises Anwenden von Mobilfunk und GPS Systembestandteilen beschreibt. Das System ist ausgelegt um ein dauerhaftes und simultanes Übertragung von Sprach- und Ortssignalen zu einen Aufzeichnungscenter bereitzustellen. Das Aufzeichnungscenter vergleicht komponentenweise, um mit dem Fahrzeug zu kommunizieren und den Ort des Fahrzeugs in einer digitalen Karte mit der Zuhilfenahme eines Computers zu bestimmen. Somit gibt diese Druckschrift die Benutzung eines zellularen Funkstandards, Unfalldetektionssensoren und das Aussenden eines GPS-Ortungssignals.

Die US 5081667 offenbart ebenfalls ein Anschlusssystem zum Verbinden von mobilfunkbasierten Systemen mit fahrzeugsicherheitstechnischen Systemen. Dieses System umfasst einen Kontroller und eine Benutzerschnittstellenanordnung für das Anpassen eines Mobilfunktelefons an den Kotroller und beschreibt somit die Benutzung unterschiedlicher drahtloser Übertragungsstandards wie z.B. GSM und UMTS in einem Fahrzeugnotrufssystem.

Die GB2397930 und die EP1054371 beschreiben automatische Notrufsysteme für Kraftfahrzeuge.

### Zusammenfassung der Erfindung

Es ist eine Aufgabe der Erfindung, die Beschleunigung eines Rettungseinsatzes für einen Fahrer eines verunfallten Fahrzeugs zu ermöglichen.

Die Erfindung ist durch die angefügten Ansprüche definiert. Es sind eine Notrufeinheit für ein Fahrzeug, ein Fahrzeug mit einer Notrufeinheit, ein Verfahren zum mehrmaligen Übermitteln eines Ortungssignals an einen Empfänger einer Einsatzkraft durch eine Sendeeinheit eines Fahrzeugs, ein Programmelement und ein computerlesbares Medium gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen die Notrufeinheit, das Fahrzeug, das Verfahren, das Programmelement und das computerlesbare Medium. In anderen Worten lassen sich z. B. die im Folgenden im Hinblick auf die Notrufeinheit genannten Merkmale auch als Verfahrensschritte, Programmbausteine für das Programmelement oder in dem computerlesbaren Medium implementieren, und umgekehrt.

Gemäß einem Ausführungsbeispiel der Erfindung ist eine Notrufeinheit für ein Fahrzeug angegeben, welche eine Positionserfassungseinheit zur Erfassung einer Position des Fahrzeugs, eine Steuereinheit zum Erzeugen eines Ortungssignals und eine Sendeeinheit zum mehrmaligen Übermitteln des Ortungssignals an einen Empfänger aufweist. Das Ortungssignal ermöglicht ein Auffinden des Fahrzeugs. Das mehrmalige Übermitteln des Ortungssignals wird von dem Triggerereignis getriggert.

Gemäß einem weiteren Ausführungsbeispiel der Erfindung weist die Notrufeinheit eine Positionserfassungseinheit zur Erfassung einer Position des Fahrzeugs auf, wobei das Ortungssignal auf der erfassten Position basiert.

In anderen Worten ist die Notrufeinheit in der Lage, die Position des Fahrzeugs zu bestimmen und dem Empfänger, bei dem es sich beispielsweise um ein mobiles Empfangsgerät einer Einsatzkraft handeln kann, dieses Ortungssignal mehrmals zu übermitteln. Die Übermittlung des Ortungssignals hilft den Einsatzkräften, das Fahrzeug aufzufinden und ist insbesondere in solchen Fällen von hohem Wert, wenn ein automatisierter Notruf (eCall) unzureichende Informationen enthält.

Bei dem Ortungssignal kann es sich um ein Signal handeln, dass Informationen über die Position des Fahrzeugs enthält. Es kann sich aber auch um eine definierte Bitfolge handelt, ähnlich einem Morsecode, welche zum Ausdruck bringt, dass es sich um eine Notsituation handelt (also z.B. ein "SOS" Signal). Dieses Signal kann dann von den Rettungskräften analysiert und angepeilt werden, um die Position des Fahrzeugs zu ermitteln.

Da das Ortungssignal mehrmals übermittelt wird, können auch später hinzugezogene Einsatzkräfte das Ortungssignal empfangen, selbst wenn sie beispielsweise den vorhergehenden eCall nicht empfangen haben.

Gemäß einem weiteren Ausführungsbeispiel der Erfindung handelt es sich bei der Sendeeinheit um einen Funkschlüssel (drahtlose Fahrberechtigungseinheit) des Fahrzeugs oder um einen fahrzeugseitigen (also im Fahrzeug vorgesehenen und gegebenenfalls fest installierten) Sender/Empfänger.

Die Sendeeinheit ist also von einem möglichen eCall-Modul des Fahrzeugs entkoppelt. Auf diese Weise wird eine Redundanz in der Informationsübermittlung an die Einsatzkräfte bereitgestellt, welche die Wahrscheinlichkeit erhöhen kann, dass wichtige Informationen auch tatsächlich von den Einsatzkräften empfangen werden. Auf diese Weise kann der Rettungseinsatz maßgeblich beschleunigt werden.

Gemäß einem weiteren Ausführungsbeispiel der Erfindung ist die Notrufeinheit zum Übermitteln des Ortungssignals in regelmäßigen zeitlichen Abständen ausgeführt.

Gemäß einem weiteren Ausführungsbeispiel der Erfindung ist die Sendeeinheit zur Übermittlung des Ortungssignals auf Basis der folgenden Kommunikationsstandards ausgeführt: WLAN 802.11p, WLAN 802.11a/b/g/n, WiMax, Bluetooth, ZigBee oder Zellularfunk.

Insbesondere kann die Sendeeinheit derart ausgeführt sein, dass sie das Ortungssignal (und ggf. weitere Informationen) parallel oder zeitlich versetzt auf verschiedenen Kommunikationswegen übermittelt und beispielsweise nutzt die Notrufeinheit hierbei Nahbereichskommunikation und zusätzlich Zellularfunk (Mobilfunk).

Auch können mehrere einzelne Sendeeinheiten vorgesehen sein. Insbesondere ist es möglich, dass als zusätzliche Sendeeinheit ein Mobilfunktelefon des Fahrers verwendet wird, welches die Informationen für das Ortungssignal und ggf. die zusätzlichen Informationen von der Steuereinheit der Notrufeinheit übermittelt bekommt. Diese Übermittlung kann kabelgebunden erfolgen, wenn beispielsweise das Mobilfunktelefon mittels Kabelverbindung an die Steuereinheit angeschlossen ist, oder aber auch drahtlos, beispielsweise über Nahbereichskommunikation (wie z.B. Bluetooth).

Insbesondere sei an diesem Punkt darauf hingewiesen, dass die Signale innerhalb der Notrufeinheit sowohl drahtgebunden als auch drahtlos zwischen den einzelnen Komponenten der Notrufeinheit (beispielsweise zwischen der Steuereinheit und der Sendeeinheit) übermittelt werden können, je nach Ausführungsform der Notrufeinheit.

Gemäß einem weiteren Ausführungsbeispiel der Erfindung werden sowohl ein Unfall des Fahrzeugs als auch ein von dem Fahrzeug bereits abgesetzter elektronischer Notruf (eCall) von der Notrufeinheit als Triggerereignis gewertet.

Beispielsweise findet also die mehrmalige Übermittlung des Ortungssignals an den Empfänger nur dann statt, wenn bereits ein eCall abgesetzt wurde. Auch ist es möglich, dass nur dann ein Ortungssignal gesendet wird, wenn die Detektionseinheit einen Unfall des Fahrzeugs detektiert hat. In diesem Fall ist die Übermittlung des Ortungssignals unabhängig davon, ob tatsächlich auch ein eCall abgegeben wird oder nicht.

Gemäß einem weiteren Ausführungsbeispiel der Erfindung ist die Notrufeinheit zum Empfang eines Suchsignals, das von dem Empfänger übermittelt wird, ausgeführt, wobei das Suchsignal von der Notrufeinheit als Triggerereignis gewertet wird.

Auf diese Weise ist es möglich, dass eine Rettungskraft ein Ortungssignal und ggf. zusätzliche Informationen beim verunfallten Fahrzeug anfragt, falls solche Informationen benötigt werden.

Auf diese Weise kann die Notrufeinheit Energie sparen, da nicht ständig Ortungssignale gesendet werden. Die Ortungssignale werden beispielsweise nur dann gesendet, wenn sie auch angefragt werden.

Gemäß einem weiteren Ausführungsbeispiel der Erfindung wird das Suchsignal von der Notrufeinheit nur dann als Triggerereignis gewertet, wenn zuvor ein Unfall des Fahrzeugs oder das Absetzen eines elektronischen Notrufs detektiert wurde.

Auf diese Weise kann ausgeschlossen werden, dass das Ortungssignal auch dann abgefragt werden kann, wenn dazu keine Veranlassung besteht, weil das Fahrzeug gar nicht verunfallt ist.

Gemäß einem weiteren Ausführungsbeispiel der Erfindung ist die Notrufeinheit zum parallelen Übermitteln des Ortungssignals auf mehreren Übertragungswegen ausgeführt. Durch diese Redundanz kann die Sicherheit weiter erhöht werden.

Gemäß einem weiteren Ausführungsbeispiel der Erfindung ist die Steuereinheit zur Weitergabe von weiteren Daten bzw. Informationen an die Sendeeinheit ausgeführt. Diese weiteren Daten können zusammen mit dem Ortungssignal oder seriell zum Ortungssignal übermittelt werden. Insbesondere ist es möglich, dass die Einsatzkräfte die Informationen explizit abrufen können. Beispielsweise kann es für eine Einsatzkraft wichtig sein, einen Rettungsleitfaden in einer bestimmten Sprache zu erhalten. Dieser kann bei der Notrufeinheit angefordert werden und wird daraufhin übermittelt.

Gemäß einem weiteren Ausführungsbeispiel der Erfindung ist die Sendeeinheit zum Übermitteln des Ortungssignals und weiterer Informationen an benachbarte Fahrzeuge ausgeführt.

Fahrzeuge, die eine entsprechende Notrufeinheit aufweisen, können diese Informationen dann beispielsweise an eine Rettungsleitstelle oder an die Einsatzkräfte weiterreichen.

Gemäß einem weiteren Ausführungsbeispiel der Erfindung ist die Notrufeinheit zum Empfang eines Steuersignals, das von dem Empfänger übermittelt wird, ausgeführt, wobei das empfangene Steuersignal zur Steuerung einer Funktion einer Systemkomponente des Fahrzeugs ausgeführt ist.

Auf diese Weise ist es möglich, dass die Rettungskräfte beispielsweise die Hupe oder die Lichter des Fahrzeugs aktivieren. Auf diese Weise kann das Auffinden des Fahrzeugs erleichtert werden.

Gemäß einem weiteren Ausführungsbeispiel der Erfindung wird ein von der Notrufeinheit empfangenes Meldesignal, welches mit einem gemeldeten Diebstahl des Fahrzeugs zusammenhängt, von der Notrufeinheit als Triggerereignis gewertet.

Wird das Fahrzeug als gestohlen gemeldet, kann das Meldesignal von einer entsprechenden (ggf. zertifizierten) Zentrale oder direkt vom Eigentümer des Fahrzeugs (beispielsweise durch Eingabe eines entsprechenden Identifikationscodes in sein Mobiltelefon) ausgesendet werden. Daraufhin sendet die Notrufeinheit automatisch das Ortungssignal, wodurch das Fahrzeug dann aufgefunden werden kann.

Gemäß einem weiteren Ausführungsbeispiel der Erfindung ist ein Fahrzeug mit einer oben und im Folgenden beschriebenen Notrufeinheit angegeben.

Gemäß einem weiteren Ausführungsbeispiel der Erfindung ist ein Verfahren zum mehrmaligen Übermitteln eines Ortungssignals an einen Empfänger einer Einsatzkraft durch eine Sendeeinheit eines Fahrzeugs angegeben. Bei dem Verfahren erfolgt eine Detektion eines Triggerereignisses. Daraufhin wird die Erzeugung und mehrmalige Übermittlung eines Ortungssignals durch das Triggerereignis getriggert. Weiterhin erfolgt die Erzeugung des Ortungssignals. In einem weiteren Schritt erfolgt dann das mehrmalige Übermitteln des Ortungssignals an den Empfänger, wobei das Ortungssignal es Rettungskräften ermöglicht, die Fahrzeugposition aufzufinden.

Gemäß einem weiteren Ausführungsbeispiel der Erfindung ist ein Programmelement angegeben, das, wenn es auf einem Prozessor einer Notrufeinheit eines Fahrzeugs ausgeführt wird, den Prozessor anleitet, die oben und im Folgenden angegebenen Schritte durchzuführen.

Gemäß einem weiteren Ausführungsbeispiel der Erfindung ist ein computerlesbares Medium angegeben, auf dem ein Programmelement gespeichert ist, das, wenn es auf einem Prozessor einer Notrufeinheit eines Fahrzeugs ausgeführt wird, den Prozessor anleitet, die oben und im Folgenden angegebenen Schritte durchzuführen.

Im Folgenden werden mit Verweis auf die Figuren Ausführungsbeispiele der Erfindung beschrieben.

### Kurze Beschreibung der Figuren

Fig. 1 zeigt ein Notrufsystem mit einer Notrufeinheit 100 und einem Empfänger 105 gemäß einem Ausführungsbeispiel der Erfindung.
Fig. 2 zeigt ein Notrufsystem gemäß einem Ausführungsbeispiel der Erfindung, wobei zumindest ein Teil der Notrufeinheit in einem Fahrzeug installiert ist.
Fig. 3 zeigt ein Notrufsystem gemäß einem Ausführungsbeispiel der Erfindung mit einem Funkschlüssel und einem Mobiltelefon als Sender.
Fig. 4 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

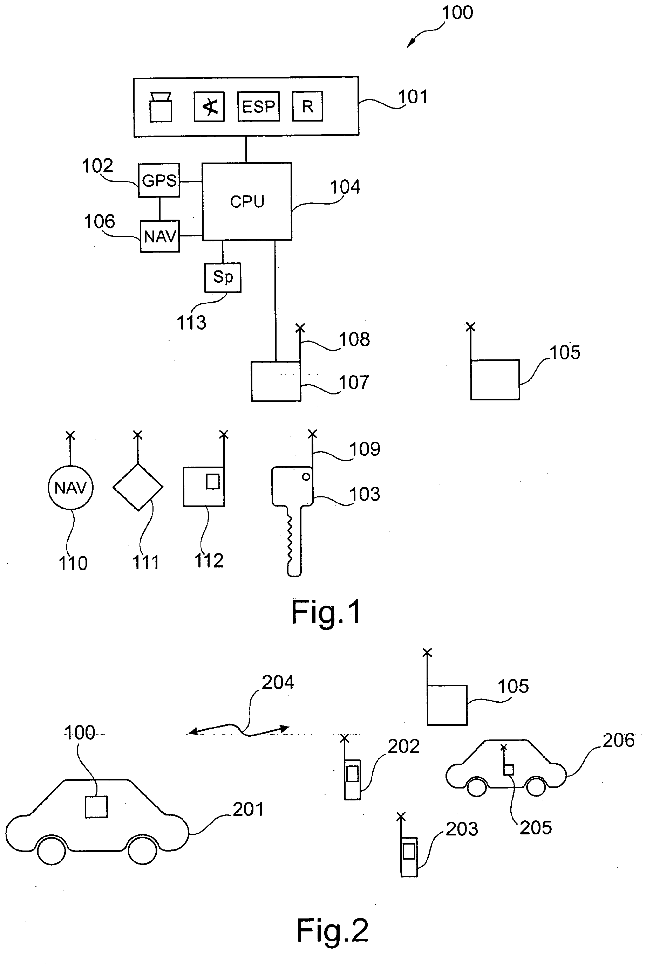

Fig. 1 zeigt ein Notrufsystem mit einer Notrufeinheit 100 und einem Empfänger 105 gemäß einem Ausführungsbeispiel der Erfindung.

Die Notrufeinheit 100 weist eine zentrale Steuereinheit 104 auf, an welche beispielsweise eine Detektionseinheit 101, ein Satellitennavigationsempfänger 102, eine Navigationseinheit 106 sowie eine Kommunikationseinheit 107 mit einer Antenne 108 angeschlossen sind. Diese Kommunikationseinheit kann z.B. der fahrzeugseitige Transceiver eines RKE (Remote Keyless Entry) Systems sein, aber auch WLAN-Module nach IEEE802.11a/b/g/n/p, WiMax, Bluetooth, ZigBee, Zellularfunk, etc.

Weiterhin weist die Notrufeinheit 100 mehrere zusätzliche Sendeeinheiten auf. Hierbei handelt es sich beispielsweise um einen Funkschlüssel 103 mit einer Antenne 109, ein Mobiltelefon 112, eine fest im Fahrzeug installierte Kommunikationseinheit 111 sowie ein mobiles Navigationsgerät 110.

Die verschiedenen Sender 107, 110, 111, 112, 103 können derart ausgeführt sein, dass sie jeweils verschiedene Übertragungstechniken nutzen, wie z. B. RKE (Remote Keyless Entry), DSRC, WiMax, Bluetooth oder Zellularfunk.

Auf diese Weise kann eine Redundanz in der Signalübertragung bereitgestellt werden, welche die Wahrscheinlichkeit, dass die Daten sicher übertragen werden, weiter erhöhen kann.

Bei dem Empfänger 105 kann es sich beispielsweise um ein Mobiltelefon einer Rettungskraft oder auch um den Empfänger in einer Rettungsleitzentrale handeln.

An dieser Stelle sei darauf hingewiesen, dass es sich bei dem Fahrzeug beispielsweise um ein Kraftfahrzeug, wie Auto, Bus oder Lastkraftwagen, oder aber auch um ein Schienenfahrzeug, ein Schiff, ein Luftfahrzeug, wie Helikopter oder Flugzeug, oder beispielsweise um ein Motorrad handeln kann.

Weiterhin sei darauf hingewiesen, dass es sich im Kontext der vorliegenden Erfindung bei der Positionierungseinheit 102 (siehe Fig. 1) um beispielsweise ein globales Navigationssatellitensystem (GNSS) handelt, z. B. GPS, Galileo, GLONASS (Russland), Compass (China), IRNSS (Indien).

Fig. 2 zeigt eine weitere Darstellung eines Notrufsystems gemäß einem Ausführungsbeispiel der Erfindung. Die Notrufeinheit 100 ist in einem Fahrzeug 201 installiert, wobei der bzw. die Sendeeinheiten 103 mobile (also nicht fest installierte) Sendeeinheiten sein können, beispielsweise ein Funkschlüssel und/oder ein Mobiltelefon.

Weiterhin sind mehrere Empfänger 105, 202, 203 vorgesehen. Bei dem Empfänger 105 handelt es sich beispielsweise um eine Rettungsleitzentrale und bei den Empfängern 202, 203 um Mobiltelefone von Rettungskräften.

Weiterhin kann ein Empfänger 205 vorgesehen sein, der in einem Fahrzeug 206 integriert ist.

Die Datenübertragung findet kabellos über den Funkübertragungsweg 204 statt. Zur Datenübertragung können verschiedene Funkstandards eingesetzt werden.

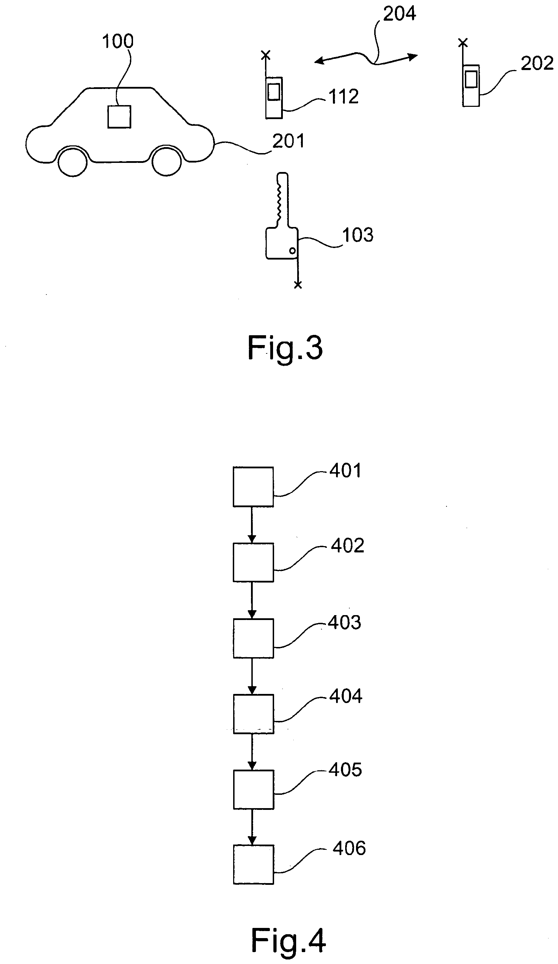

Fig. 3 zeigt ein Notrufsystem gemäß einem weiteren Ausführungsbeispiel der Erfindung. Ein Teil der Notrufeinheit 100 ist fest in dem Fahrzeug 201 installiert. Die verschiedenen Sendeeinheiten 112, 103 der Notrufeinheit befinden sich außerhalb des Fahrzeugs, da die Insassen das Fahrzeug verlassen haben und diese Sendeeinheiten mit sich tragen.

Wurde von der Detektionseinheit 101 (siehe Fig. 1) des Fahrzeugs ein Unfall detektiert (z. B. durch die Sensorik der passiven Sicherheitssysteme des Fahrzeugs) und/oder wurde ein eCall abgesetzt, so sendet das Fahrzeug in regelmäßigen Abständen ein Ortungssignal aus.

Über dieses Ortungssignal werden die Rettungskräfte in die Lage versetzt, selbst bei schlechten Sichtverhältnissen oder von der Straße abgekommenen Fahrzeugen diese über einen Empfänger zu orten und damit die Suchzeit deutlich zu reduzieren. Zur Übermittlung des Ortungssignals kann die Technik für den Funkschlüssel (sowohl der fahrzeugseitige Transceiver, als auch der eigentliche Schlüssel) des Fahrzeugs eingesetzt werden, da viele heutige Fahrzeuge bereits mit einem solchen Funkschlüssel ausgerüstet sind. Es sind jedoch auch andere Übertragungstechniken möglich und gewünscht, wie z. B. DSRC (WLAN IEEE 802.11p), WLAN IEEE 802.11a/b/g/n), WiMax, Bluetooth, ZigBee und Mobilfunk. Diese verschiedenen Kommunikationstechniken können gleichzeitig oder seriell verwendet werden.

Ist der Batterieladezustand der Fahrzeugbatterie unter einen bestimmten Wert gefallen (also als kritisch eingestuft) wird das Ortungssignal nur nach dem Empfang eines Suchsignals ausgesendet. Dieses Suchsignal wird durch die Rettungskräfte ausgesendet.

Um den Datenschutz zu gewährleisten, reagiert die Notrufeinheit nur nach einem Unfall und/oder einem eCall auf ein Suchsignal. So wird sichergestellt, dass ein Fahrzeug nicht "ausgehorcht" werden kann, wenn kein Notfall vorliegt.

Zusätzlich zu dem Ortungssignal können weitere Informationen aus dem Fahrzeug übertragen werden. Über diese Informationen können sich die Rettungskräfte ein besseres Bild der Lage machen, auch wenn das Fahrzeug sofort gefunden wird (weil es sich z. B. auf der Straße befindet).

Mögliche zusätzliche Daten sind Fahrzeugfarbe (für das einfachere Auffinden und Identifizieren des Fahrzeugs), Fahrzeugtyp (ebenfalls für das einfachere Auffinden und Identifizieren), Tankfüllstand, Ladezustand der Batterie, Fahrgestellnummer, und / oder die Kennung des gesendeten Notrufs.

Die Kennung des gesendeten Notrufs wird auch bei einem eCall mitgesendet. Auf diese Weise kann vermieden werden, dass bei mehreren Notrufen aus einer Umgebung eines der Notruffahrzeuge vergessen wird, weil z. B. das Notruffahrzeug (verunfallte Fahrzeug) des ersten Notrufs von der Straße abgekommen ist und das Fahrzeug des zweiten Notrufs sich auf der Straße befindet.

Die Übermittlung der Fahrgestellnummer kann wichtig sein, da hierüber weitere Informationen angefordert bzw. zurate gezogen werden können, wie z. B. Rettungsleitfäden. Vor allem bei Fahrzeugen mit Airbags, Hybridfahrzeugen oder H2-Fahrzeugen ist dies wichtig, da hier bei der Befreiung von eingeklemmten Personen Schnitte an den falschen Stellen zur Gefahr für Retter und Fahrzeuginsassen werden können.

Ist eine Kommunikationsschnittstelle mit größerer Bandbreite vorhanden, kann der entsprechende Rettungsleitfaden über diese Kommunikationsschnittstelle direkt an die Einsatzkräfte übermittelt werden. Der Rettungsleitfaden kann im Fahrzeug gespeichert werden, beispielsweise im Speicher 113 (siehe Fig. 1). Auf diese Weise kann eine falsche Zuordnung von Fahrgestellnummer und Rettungsleitfaden durch die Rettungskräfte ausgeschlossen werden. Außerdem kann verhindert werden, dass der Rettungsleitfaden erst zeitraubend besorgt werden muss, falls dieser bei den Rettungskräften nicht vorhanden ist. Bei der heutigen großen Anzahl an Fahrzeugtypen und Modellvarianten stellt dies eine deutliche Vereinfachung der Arbeit für die Rettungskräfte dar. Beispielsweise kann der Rettungsleitfaden in einem international standardisierten Format (z. B. PDF) und in mehreren Sprachen in der Notrufeinheit gespeichert sein, damit auch Fahrten über Ländergrenzen hinweg kein Problem darstellen.

Durch das Ortungssignal und die zusätzlichen Informationen, die über den oder die Sendeeinheiten übermittelt werden, können die Arbeit der Rettungskräfte erleichtert und damit die Zeit bis zur Rettung verkürzt werden. Bei der Verwendung von bereits im Fahrzeug vorhandenen Kommunikationstechniken (z. B. Schlüsselfunk, DSRC, ...) sind der Hardwaremehraufwand bei Installation der Notrufeinheit und damit die entsprechenden Installationskosten gering.

Fig. 4 zeigt ein Flussdiagramm eines Verfahrens gemäß einem Ausführungsbeispiel der Erfindung, bei dem in Schritt 401 ein Unfall des Fahrzeugs detektiert wird. In Schritt 402 erfolgt die Erzeugung eines Ortungssignals, das z.B. mit der Fahrzeugposition korrespondiert oder zur Peilung des Fahrzeugs dient. In Schritt 403 wird dieses Ortungssignal zusammen mit weiteren Informationen, wie beispielsweise der Fahrgestellnummer des Fahrzeugs, an Einsatzkräfte übermittelt. In Schritt 404 geht eine Anfrage durch die Rettungskräfte in der Notrufeinrichtung des Fahrzeugs ein, woraufhin die Notrufeinrichtung den Rettungsleitfaden des Fahrzeugs sowie ein weiteres Ortungssignal an die Rettungskräfte übermittelt. Hierbei wird eine schnelle Kommunikationsverbindung genutzt.

In Schritt 405 erfolgt die Übermittlung eines Steuersignals durch die Rettungskräfte, woraufhin in Schritt 406 die Hupe des Fahrzeugs aktiviert wird, um das Auffinden des Fahrzeugs zu erleichtern.

Im Folgenden werden weitere Ausführungsbeispiele der Erfindung beschrieben.

Heutige Systeme zur Unfallvermeidung untersuchen das Umfeld des Fahrzeugs, erkennen einen drohenden Unfall und versuchen, diesen zu vermeiden, indem z.B. automatisch gebremst wird. Geschieht der Unfall dennoch, so wird ein automatischer Notruf (eCall) abgesendet. Mit diesen Systemen sind somit viele Informationen im Fahrzeug verfügbar, die auch für andere Fahrzeuge hilfreich sein können.

Teil eines solchen Systems kann die Detektionseinheit 101 sein, welche beispielsweise eine Kamera, einen Lenkradwinkelsensor, eine ESP-Sensorik und einen Radarsensor sowie, falls erforderlich, zusätzliche Sensoren, aufweist.

Über die Sendeeinheit der Notrufeinrichtung 100 (siehe Fig. 1), insbesondere über den Funkschlüssel 103, können Informationen über einen möglichen Unfall an andere Fahrzeuge versendet werden. Somit kann noch vor dem Markieren einer Unfallstelle mit einem Warndreieck der Verkehr gewarnt werden und damit auch die Sicherheit an der Unfallstelle verbessert werden.

Beispielsweise wird die Warnung so übertragen, dass es unerheblich ist, nach welchem Verfahren die "normale" Fahrberechtigung (über den Funkschlüssel) abgewickelt wird, d. h. dass es einfach möglich ist, herstellerübergreifend Warnungen auszutauschen und zu verstehen. Gemäß einem Ausführungsbeispiel der Erfindung ist das Steuerprogramm hierzu sowie die zusätzlich erforderliche Hardware ohne weiteres in ein bereits bestehendes Fahrerassistenzsystem bzw. Notrufsystem nachrüstbar.

Zusätzlich oder anstelle der Kommunikation über die Fahrberechtigung kann auch eine Fahrzeug-zu-X-Kommunikation z. B. über WLAN IEEE 802.11a/b/g/n/p, zellularen Funk (GSM, GPRS, EDGE, UMTS, LTE), WiMax, Bluetooth, etc. erfolgen.

Es werden gemäß diesem Ausführungsbeispiel nur schon im Fahrzeug bereits verfügbare Geräte und Einheiten verwendet, um die Fahrzeugsicherheit zu erhöhen. Die drahtlose Fahrberechtigung wird normalerweise auch in einem Frequenzband abgewickelt, das gute physikalische Ausbreitungseigenschaften aufweist und aus diesem Grund können die Warnungen und Ortungsinformationen auch bei unübersichtlichen Straßenverläufen den nachfolgenden Verkehr erreichen. Die notwendigen Daten sind zudem so gering, dass die geringe Datenrate der Fahrberechtigungskommunikation absolut ausreichend ist.

Wird also ein automatisierter Notruf gesendet (z. B. aufgrund einer Airbagauslösung oder aufgrund einer manuellen Auslösung), so wird eine Warnung mittels der Fahrberechtigungskommunikation ausgesendet. Diese Warnung wird als Broadcast versendet, damit alle Fahrzeuge in der Kommunikationsreichweite die Warnung erhalten. Hierbei bietet es sich an, Botschaften aus der Fahrzeug-zu-X-Kommunikation zu verwenden, da diese schon standardisiert sind oder sich gerade in der Standardisierung befinden. Mit diesen Botschaften ist es auch möglich, den genauen Ort des Unfalls zu versenden und damit eine genauere Warnung in den empfangenden Fahrzeugen darzustellen. Eine Standardisierung der Kommunikation mittels Fahrberechtigung als Ganzes ist hierbei von Vorteil.

Eine andere Möglichkeit besteht darin, ein definiertes Bitmuster in einer definierten physikalischen Codierung zyklisch als Warnung zu versenden (ähnlich SOS mittels Morsen). Dadurch muss nur dieses Bitmuster standardisiert werden und die sonstige Ausgestaltung der Kommunikation für z. B. Fahrberechtigung ist davon nicht betroffen. In diesem Fall kann von der Übermittlung der Ortungsinformation abgesehen werden.

Weitere Ursachen für die Versendung der Warnung bzw. der Ortungsinformation können automatische Bremsungen aufgrund von sog. Collision Mitigation Systemen oder automatischen Notbremssystemen oder Bremsassistenten sein. Die Warnung kann mehrere Stufen (also jeweils verschiedene Inhalte) aufweisen, wobei ein wirklich stattgefundener Unfall die größte Warnstufe bekommt, die Vermeidung des Unfalls eine etwas geringere Warnstufe.

Parallel zu oder anstelle der Fahrberechtigungskommunikation kann auch Fahrzeug-zu-X-Kommunikation verwendet werden.

Gemäß einem weiteren Ausführungsbeispiel sendet das Fahrzeug nach einem Unfall das Ortungssignal aus. Um nun den suchenden Einsatzkräften das Auffinden des Fahrzeugs zu erleichtern, können diese über ihren Empfänger das Auto dazu auffordern, zu hupen oder beispielsweise die Lichter (Front- und Heckscheinwerfer, Blinker, Innenraumbeleuchtung, ...) einzuschalten. Um Missbrauch zu vermeiden, wird diese Funktion durch das Fahrzeug jedoch nur dann freigeschaltet, wenn bereits ein Ortungssignal ausgesendet ist bzw. ein Unfall detektiert wurde.

Auch können einmalige Ortungshilfen, wie z. B. Leuchtraketen, usw. auf diese Weise aktiviert werden. Es wird hierbei sichergestellt, dass diese Ortungshilfen nicht versehentlich aktiviert werden können und nur dann aktivierbar sind, wenn sie keine Gefahr darstellen.

Weiterhin können Einsatzkräfte über das Notrufsystem den Status der Airbags des verunfallten Fahrzeugs abfragen und ggf. die Airbags deaktivieren oder notfalls auch auslösen, um Gefahren bei der Bergung für das Rettungspersonal durch unkontrolliert auslösende Airbags auszuschließen. Ebenfalls ist es möglich und vorgesehen, den Status von Batterien und Tanks abzufragen (beispielsweise für den Füllstand eines Benzintanks oder Wasserstofftanks) oder aber beispielsweise auch die Temperaturen bestimmter Fahrzeugkomponenten. So kann festgestellt werden, ob die Tanks auslaufen (falls der Tankfüllstand nicht konstant bleibt) oder ob es irgendwo am Fahrzeug Kurzschlüsse z. B. mit der Karosserie gibt (falls die Batterie dies erkennen kann).

Im Folgenden sind beispielhafte Szenarien genannt, um die Wirkungsweise der Erfindung weiter zu verdeutlichen:
Erstes Szenario:
   Ein Fahrzeug kommt von der Straße ab, überschlägt sich und bleibt im Gebüsch liegen. Per eCall werden die Einsatzkräfte alarmiert und kommen an die Unfallstelle. Zusätzlich sendet das Fahrzeug ein Ortungssignal aus. Da die Rettungskräfte das Fahrzeug nicht sofort entdecken können, aktivieren sie über das Ortungsgerät Hupe und Licht des Fahrzeugs. Dadurch fällt das Fahrzeug im Gebüsch auf und die Fahrzeuginsassen können zeitnah geborgen werden.
Zweites Szenario:
   Ein Fahrzeug wurde von Rettungskräften nach einem Unfall gefunden. Das Fahrzeug sendet weiterhin ein Ortungssignal aus. Die Einsatzkräfte fragen nun über diese Kommunikationsverbindung ab, ob die Airbags ausgelöst haben und wie der Tankstand ist. Dabei stellen sie fest, dass der Tank langsam ausläuft und können daraufhin entsprechende Vorsichtsmaßnahmen einleiten.

Im Folgenden wird noch ein weiteres Ausführungsbeispiel der Erfindung beschrieben:
Beim sog. Stolen Vehicle Tracking (SVT) wird typischerweise per Mobilfunk die (GPS-) Position des gestohlenen Fahrzeugs ausgesendet.

Wird ein Fahrzeug als gestohlen gemeldet, so kann über Mobilfunk bzw. SVT die Aussendung des Ortungssignals getriggert (also freigeschaltet) werden. Bei einem so freigeschalteten Fahrzeug kann auch von außen über z. B. Einsatzkräfte das Licht, die Hupe, etc. aktiviert werden. Somit wird es einfacher, das gestohlene Fahrzeug zu finden und zu identifizieren.

Um es Dieben zu erschweren, das System zu umgehen, wird die Funktion auch freigeschaltet, wenn kein Signal von der SVT-Anlage mehr anliegt. Wird also von Dieben die SVT-Anlage deaktiviert, so wird automatisch das Ortungssignal ausgesendet und von außen kann die Hupe, etc. aktiviert werden. Die Ortungsfunktion ist zudem an das Remote Keyless Entry (RKE) System gekoppelt.
Um also die Ortung zu deaktivieren, muss auch RKE deaktiviert werden und damit wird das Auto ggf. fahruntüchtig bzw. unbrauchbar. Beispielsweise sind dazu RKE und die Ortungsfunktion untrennbar miteinander verbunden, also z. B. in einem Computerchip realisiert. Damit wird es für Diebe auch aufwändiger, das Auto von SVT komplett zu befreien, ohne sonstige Funktionen einzuschränken.

Im Folgenden werden wieder zwei Szenarien zur Implementierung der Erfindung beschrieben:
Erstes Szenario:
   Ein Fahrzeug wird als gestohlen gemeldet. Daraufhin wird über die SVT-Verbindung das Ortungssignal freigeschaltet. Eine Polizeistreife fährt zufällig am gestohlenen Fahrzeug vorbei (ohne zu wissen, dass es gestohlen wurde) und empfängt das Ortungssignal. Daraufhin wird in der Zentrale nachgefragt, ob das Fahrzeug als gestohlen gemeldet und bei entsprechender Bestätigung kann das Fahrzeug direkt beschlagnahmt werden. In demselben Schritt können ggf. auch die Diebe festgenommen werden.
Zweites Szenario:
   Ein Fahrzeug wird als gestohlen gemeldet. Daraufhin wird über die SVT-Verbindung das Ortungssignal freigeschaltet. Die Polizei nähert sich der letzten gesendeten GPS-Position des Fahrzeugs und aktiviert die Hupe und das Licht des Fahrzeugs über die Funkschnittstelle. Damit ist es einfach, das Fahrzeug selbst in einem Hinterhof zu finden.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Notrufeinheit für ein Fahrzeug, die Notrufeinheit (100) aufweisend:
eine Detektionseinheit (101) zur Detektion eines Triggerereignisses;
eine Steuereinheit (104) zum Erzeugen eines Ortungssignals;
eine Kommunikationseinheit (107) zum mehrmaligen Übermitteln des Ortungssignals an einen Empfänger (105); und
wobei das mehrmalige Übermitteln des Ortungssignals von dem Triggerereignis getriggert ist; und
wobei das Ortungssignal ein Auffinden des Fahrzeugs ermöglicht,
**dadurch gekennzeichnet,**
**dass** die Steuereinheit (104) zum Erzeugen eines Ortungssignals an das Remote Keyless Entry System gekoppelt ist
und
**dass** die Steuereinheit (104) das Ortungssignal an die Kommunikationseinheit (107)weitergibt,
und
einen fahrzeugseitigen Kommunikationseinheit (107) zur Obermittlung des Ortungssignals auf Basis von WLAN 802.11 p Standard, WLAN 802.11 a/b/g/n Standard, WiMax Standard, Bluetooth, ZigBee, zellularen Funkstandard oder eines Remote Keyless Entry Standard ausgeführt ist.

2. Notrufeinheit nach Anspruch 1,
eine Positionserfassungseinheit (102) zur Erfassung einer Position des Fahrzeugs;
wobei das Ortungssignal auf der erfassten Position basiert.

3. Notrufeinheit nach einem der vorhergehenden Ansprüche,
ausgeführt zum Übermitteln des Ortungssignals in regelmäßigen zeitlichen Abständen.

4. Notrufeinheit nach einem der vorhergehenden Ansprüche,
wobei sowohl ein Unfall des Fahrzeugs als auch ein von dem Fahrzeug bereits abgesetzter elektronischer Notruf (Ecall)von der Notrufeinheit als Triggerereignis gewertet werden.

5. Notrufeinheit nach einem der vorhergehenden Ansprüche,
ausgeführt zum Empfang eines Suchsignals, das von dem Empfänger (105) übermittelt wird;
wobei das Suchsignal von der Notrufeinheit als Triggerereignis gewertet wird.

6. Notrufeinheit nach Anspruch 5,
wobei das Suchsignal von der Notrufeinheit nur dann als Triggerereignis gewertet wird, wenn zuvor ein Unfall des Fahrzeugs oder das Absetzen eines elektronischen Notruf detektiert wurde.

7. Notrufeinheit nach einem der vorhergehenden Ansprüche,
ausgeführt zum parallelen Übermitteln des Ortungssignals auf mehreren Übertragungswegen.

8. Notrufeinheit nach einem der vorhergehenden Ansprüche,
wobei die Steuereinheit (104) neben dem Ortungssignal weitere Daten an die Sendeinheit (103) zum Übermitteln weitergibt.

9. Notrufeinheit nach Anspruch 8,
wobei die weiteren Daten einen fahrzeugspezifischen Rettungsleitfaden umfassen.

10. Notrufeinheit nach einem der vorhergehenden Ansprüche,
wobei die Sendeeinheit (103) zum Übermitteln des Ortungssignals und weiterer Informationen an benachbarte Fahrzeuge ausgeführt ist.

11. Notrufeinheit nach einem der vorhergehenden Ansprüche,
ausgeführt zum Empfang eines Steuersignals, das von dem Empfänger (105) übermittelt wird;
wobei das empfangene Steuersignal zur Steuerung einer Funktion einer Systemkomponente des Fahrzeugs ausgeführt ist.

12. Notrufeinheit nach einem der vorhergehenden Ansprüche,
wobei ein von der Notrufeinheit empfangenes Meldesignal, welches mit einem gemeldeten Diebstahl des Fahrzeugs zusammenhängt, von der Notrufeinheit als Triggerereignis gewertet wird.

13. Fahrzeug mit einer Notrufeinheit (100) nach einem der Ansprüche 1 bis 13.

## Claims

1. Emergency call unit for a vehicle, said emergency call unit (100) having:
a detection unit (101) for detecting a trigger event;
a control unit (104) for producing a locating signal;
a communication unit (107) for the repeated transmission of the locating signal to a receiver (105); and
wherein the repeated transmission of the locating signal is triggered by the trigger event; and
wherein the locating signal allows the vehicle to be found,
**characterized**
**in that** the control unit (104) for producing a locating signal is coupled to the remote keyless entry system
and
**in that** the control unit (104) forwards the locating signal to the communication unit (107),
and
a vehicle communication unit (107) is designed for transmitting the locating signal on the basis of the WLAN 802.11 p standard, WLAN 802.11 a/b/g/n standard, WiMax standard, Bluetooth, Zig Bee, cellular radio standard or a remote keyless entry standard.

2. Emergency call unit according to Claim 1,
having a position-finding unit (102) for finding a position for the vehicle;
wherein the locating signal is based on the position found.

3. Emergency call unit according to one of the preceding claims,
designed for transmitting the locating signal at regular intervals of time.

4. Emergency call unit according to one of the preceding claims,
wherein both an accident involving the vehicle and an electronic emergency call (Ecall) already sent by the vehicle are assessed by the emergency call unit as a trigger event.

5. Emergency call unit according to one of the preceding claims,
designed for receiving a search signal which is transmitted by the receiver (105);
wherein the search signal is assessed by the emergency call unit as a trigger event.

6. Emergency call unit according to Claim 5,
wherein the search signal is assessed by the emergency call unit as a trigger event only if an accident involving the vehicle or the sending of an electronic emergency call has been detected beforehand.

7. Emergency call unit according to one of the preceding claims,
designed for the parallel transmission of the locating signal on a plurality of transmission paths.

8. Emergency call unit according to one of the preceding claims,
wherein the control unit (104) forwards not only the locating signal but also further data to the transmission unit (103) for transmission.

9. Emergency call unit according to Claim 8,
wherein the further data comprise a vehicle-specific rescue guideline.

10. Emergency call unit according to one of the preceding claims,
wherein the transmission unit (103) is designed for transmitting the locating signal and further information to adjacent vehicles.

11. Emergency call unit according to one of the preceding claims,
designed for receiving a control signal which is transmitted by the receiver (105);
wherein the received control signal is designed for controlling a function of a system component of the vehicle.

12. Emergency call unit according to one of the preceding claims,
wherein a report signal which is received by the emergency call unit and which relates to a reported theft of the vehicle is assessed by the emergency call unit as a trigger event.

13. Vehicle having an emergency call unit (100) according to one of Claims 1 to 13.

## Revendications

1. Unité d'appel d'urgence pour un véhicule, l'unité d'appel d'urgence (100) comportant :
une unité de détection (101) destinée à détecter un événement déclencheur ;
une unité de commande (104) destinée à générer un signal de localisation ;
une unité de communication (107) destinée à transmettre plusieurs fois le signal de localisation à un récepteur (105) ; et
dans laquelle la transmission plusieurs fois du signal de localisation est déclenchée par l'événement déclencheur ; et
dans laquelle le signal de localisation permet de localiser le véhicule,
**caractérisée en ce que** l'unité de commande (104) est couplée au système d'entrée sans clé à distance pour générer un signal de localisation et
**en ce que** l'unité de commande (104) transfère le signal de localisation à l'unité de communication (107), et
**en ce qu'**une unité de communication de véhicule (107) destinée à transmettre le signal de localisation est réalisée sur la base de la norme WLAN 802.11p, WLAN 802.11a/b/g/n, WiMax, du Bluetooth, du ZigBee, de la norme radio cellulaire ou de la norme Remote Keyless Entry.

2. Unité d'appel d'urgence selon la revendication 1, comprenant
une unité de détection de position (102) destinée à détecter une position du véhicule ;
dans laquelle le signal de localisation est basé sur la position détectée.

3. Unité d'appel d'urgence selon l'une des revendications précédentes,
conçue pour transmettre le signal de localisation à intervalles réguliers.

4. Unité d'appel d'urgence selon l'une des revendications précédentes,
dans laquelle un accident du véhicule et un appel d'urgence électronique (Ecall) déjà établi par le véhicule sont évalués par l'unité d'appel d'urgence en tant qu'événement déclencheur.

5. Unité d'appel d'urgence selon l'une quelconque des revendications précédentes,
conçue pour recevoir un signal de recherche transmis par le récepteur (105) ;
dans laquelle le signal de recherche est évalué par l'unité d'appel d'urgence en tant qu'événement déclencheur.

6. Unité d'appel d'urgence selon la revendication 5,
dans laquelle le signal de recherche de l'unité d'appel d'urgence n'est évalué comme événement déclencheur que si un accident du véhicule ou l'établissement d'un appel d'urgence électronique a été préalablement détecté.

7. Unité d'appel d'urgence selon l'une quelconque des revendications précédentes,
conçue pour la transmission en parallèle du signal de localisation sur plusieurs voies de transmission.

8. Unité d'appel d'urgence selon l'une des revendications précédentes,
dans laquelle l'unité de commande (104) transfère d'autres données à l'unité d'émission (103) pour leur transmission en plus du signal de localisation.

9. Unité d'appel d'urgence selon la revendication 8,
dans laquelle les autres données comprennent un guide de sauvetage spécifique du véhicule.

10. Unité d'appel d'urgence selon l'une des revendications précédentes,
dans laquelle l'unité d'émission (103) est conçue pour transmettre le signal de localisation et d'autres informations à des véhicules voisins.

11. Unité d'appel d'urgence selon l'une des revendications précédentes,
conçue pour recevoir un signal de commande transmis par le récepteur (105) ;
dans laquelle le signal de commande reçu est destiné à commander une fonction d'un composant du système du véhicule.

12. Unité d'appel d'urgence selon l'une des revendications précédentes,
dans laquelle un signal d'alarme reçu de l'unité d'appel d'urgence, qui est associé à un vol signalé du véhicule, est évalué par l'unité d'appel d'urgence en tant qu'événement déclencheur.

13. Véhicule comportant une unité d'appel d'urgence (100) selon l'une des revendications 1 à 13.
